# EUROPÄISCHE PATENTSCHRIFT

(11) **EP 2 605 930 B1**
(45) Veröffentlichungstag und Bekanntmachung des Hinweises auf die Patenterteilung: **16.03.2016**
(21) Anmeldenummer: 11761496.6
(22) Anmeldetag: 12.08.2011
(51) Int. Cl.: B60L 11/12, B60W 30/194, F02N 11/04, F02N 11/08, B60K 6/46, F02N 19/04, F02D 41/06

(54) **VERFAHREN ZUM STARTEN DER INTERNEN STROMERZEUGUNG IN EINEM ELEKTROFAHRZEUG**
METHOD FOR STARTING INTERNAL POWER GENERATION IN AN ELECTRIC VEHICLE
PROCÉDÉ POUR DÉMARRER LA GÉNÉRATION D'ÉLECTRICITÉ INTERNE DANS UN VÉHICULE ÉLECTRIQUE

(30) Priorität: 16.08.2010 DE 102010034443
(43) Veröffentlichungstag der Anmeldung: 26.06.2013
(73) Patentinhaber: AVL List GmbH, 8020 Graz (AT)
(72) Erfinder: FISCHER, Robert, A-8010 Graz (AT)
(74) Vertreter: Krauns, Christian
(86) Internationale Anmeldenummer: PCT/EP2011/004071
(87) Internationale Veröffentlichungsnummer: WO 2012/022455

(56) Entgegenhaltungen:
- EP-A1- 1 382 475
- EP-A2- 1 127 733
- EP-A2- 1 225 073
- DE-A1- 10 132 671
- US-A1- 2002 157 883
- US-A1- 2004 121 882
- US-A1- 2010 145 562

## Beschreibung

Bei der Entwicklung von Elektrofahrzeugen, insbesondere von solchen, welche zur Verlängerung der Reichweite wenigstens eine Verbrennungskraftmaschine aufweisen, ergeben sich Problemstellungen, welche von herkömmlichen Kraftfahrzeugen mit Verbrennungskraftmaschine nicht bekannt sind, wobei diese Probleme insbesondere die Steuerung des Antriebsstrangs betreffen.

Bei herkömmlichen Kraftfahrzeugen mit einem klassischen Hubkolbenmotor, werden speziell beim Kaltstart erhöhte Emissionen freigesetzt. Unter dem Kaltstart ist dabei das Starten der Verbrennungskraftmaschine zu verstehen, die im Wesentlichen noch die Umgebungstemperatur aufweist. Ein solcher Kaltstart findet bei diesen Kraftfahrzeugen nur zu Beginn der Fahrt statt.

Bei heutigen Serienfahrzeugen mit derzeit üblichem Hybridantrieb, der zumeist eine Kombination aus einer leistungsstarken Verbrennungskraftmaschine mit einem leistungsschwächeren Elektromotor darstellt, wird die Verbrennungskraftmaschine üblicherweise zu Fahrtbeginn gestartet und erst am Ende der Fahrt wieder abgestellt. Auch hier spielt also das Kaltstartverhalten und die dabei verursachten Emissionen eine untergeordnete Rolle.

Selbst bei Fahrzeugen mit einer sogenannten Start-/Stop-Automatik, durch welche die Verbrennungskraftmaschine wiederholt abgestellt und wieder angelassen wird, ist das Problem der Kaltstartemissionen von untergeordneter Bedeutung, denn zwischen dem Abstellen und dem erneuten Anlassen der Verbrennungskraftmaschine vergeht, z.B. während des Haltens an einer roten Ampel, nur wenig Zeit, so dass hier kein Kaltstart vorliegt.

Bei Elektrofahrzeugen mit einer Verbrennungskraftmaschine, die nur zur Reichweitenverlängerung dient, tritt ein bisher unbekanntes Betriebsverhalten auf. Zum Antrieb des Elektrofahrzeugs wird in der Regel der Elektromotor mit elektrischer Energie aus der Energiespeichereinrichtung versorgt und die Verbrennungskraftmaschine steht still und ist somit frei von Emissionen. In bestimmten Situationen aber, z.B. wenn der Ladezustand einer Energiespeichereinrichtung eine vorgegebene Grenze unterschreitet, wird die Verbrennungskraftmaschine zur internen Energieerzeugung hinzugezogen, und hierbei erfolgt in der Regel ein Kaltstart. Ist nach geraumer Zeit der Betrieb der Verbrennungskraftmaschine nicht weiter notwendig, z.B. weil der Ladezustand der Energiespeichereinrichtung ausreichend erhöht wurde, wird diese wieder abgestellt. Bis zum neuerlichen Starten der Verbrennungskraftmaschine kann eine erhebliche Zeitspanne verstreichen. Bei einem erneuten Starten der Verbrennungskraftmaschine liegt im Allgemeinen wiederum ein Kaltstart vor. Damit kommt dem Kaltstartverhalten der Verbrennungskraftmaschine eine erhöhte Bedeutung zu.

Das gattungsbildende Dokument EP 1225073 offenbart ein Verfahren mit dem Merkmalen des Oberbegriffs von Anspruch 1.

Aus dem Stand der Technik sind Verfahren zum Vorwärmen bestimmter Teilbereiche der Verbrennungskraftmaschine zum Verbessern des Kaltstartverhaltens bekannt. Zur Verbesserung der Gemischaufbereitung im Saugrohr offenbart die DE 10 2008 041 600 A1, ein Verfahren, welches die folgende Schritte aufweist, Ansaugen von Luft durch den Abgastrakt, Komprimieren und damit Erwärmen dieser Luft im Zylinder, Ausstoßen der erwärmten Luft durch das Einlassventil und damit Erwärmen des Saugrohrbereichs. Aus der DE 101 32 671 A1 ist ebenfalls bekannt, Bereiche der Verbrennungskraftmaschine durch Verdichtungswärme vorzuwärmen.

Die Aufgabe der Erfindung ist es, ein verbessertes Verfahren zum Starten einer Verbrennungskraftmaschine bereitzustellen. Diese Aufgabe wird durch ein Verfahren nach Anspruch 1 gelöst, zu bevorzugende Weiterbildungen dieses Verfahrens sind Gegenstand der abhängigen Ansprüche.

Nachfolgend wird die Erfindung anhand eines Elektrofahrzeugs mit einer Verbrennungskraftmaschine, insbesondere zur Reichweitenverlängerung, beschrieben. Es wird darauf hingewiesen, dass dies die Anwendung der Erfindung nicht auf solche Fahrzeuge beschränkt.

Unter einer Verbrennungskraftmaschine ist vorzugsweise eine Einrichtung zu verstehen, in welcher chemisch gebundene Energie vorzugsweise durch eine exotherme Reaktion in mechanische Leistung überführt wird. Weiter vorzugsweise ist eine Verbrennungskraftmaschine als ein Hubkolben- oder besonders bevorzugt als Kreiskolbenmotor ausgebildet.

Unter einem Elektrofahrzeug ist vorzugsweise ein Fahrzeug zu verstehen, welches in der Regel durch wenigstens einen ersten elektromechanischen Energiewandler angetrieben wird. Neben einem solchen ersten elektromechanischen Energiewandler kann ein Elektrofahrzeug vorzugsweise aber auch eine Verbrennungskraftmaschine und weitere elektromechanische Energiewandler aufweisen.

Unter dem ersten elektromechanischen Energiewandler ist vorzugsweise eine Einrichtung zu verstehen, welcher elektrische Leistung zugeführt wird und welche diese in mechanische Leistung, vorzugsweise in eine Drehbewegung (Drehzahl, Drehmoment) umwandelt. Vorzugsweise ist ein elektromechanischer Energiewandler ein Elektromotor.

Unter einer elektrischen Energiespeichereinrichtung ist vorzugsweise eine Einrichtung zu verstehen, welche dazu vorgesehen ist, elektrische Energie in chemisch gebundener Form abzuspeichern und wieder abzugeben. Weiter vorzugsweise sind bei einer elektrischen Energiespeichereinrichtung die Vorgänge des Abspeichern und Abgebens von elektrischer Energie mehrfach wiederholbar. Vorzugsweise ist die elektrische Energiespeichereinrichtung dazu vorgesehen, den ersten elektromechanischen Energiewandler mit elektrischer Energie zu versorgen und von einem zweiten elektromechanischen Energiewandler oder von außerhalb des Fahrzeugs mit elektrischer Energie versorgt zu werden.

Unter dem zweiten elektromechanischen Energiewandler ist vorzugsweise eine Maschine zu verstehen, welche dazu vorgesehen ist, eine zugeführte mechanische Leistung in elektrische Leistung umzuwandeln. Weiter vorzugsweise ist dieser zweite elektromechanische Energiewandler auch dazu vorgesehen, elektrische Leistung in mechanische Leistung, bevorzugt in eine Drehzahl und ein Drehmoment, umzuwandeln. Vorzugsweise kann diese, vom zweiten elektromechanischen Energiewandler erzeugte elektrische Leistung in der elektrischen Energiespeichereinrichtung abgespeichert werden oder direkt an den ersten elektromechanischen Energiewandler abgegeben werden.

Unter einem Brennraum ist ein räumlicher Abschnitt zu verstehen, welcher ein vorzugsweise veränderliches Volumen aufweist. Vorzugsweise ist ein Brennraum wenigstens bereichsweise von einer Brennraumwandung umgeben. Weiter vorzugsweise kann in diesem Brennraum eine chemische Reaktion, insbesondere eine exotherme Reaktion, welche dem Betrieb der Verbrennungskraftmaschine dient, ausgeführt werden. Weiter vorzugsweise wird durch diese exotherme Reaktion ein Arbeitskolben mit einem Druck beaufschlagt. Vorzugsweise ist das Volumen dieses Brennraums durch diesen Arbeitskolben veränderbar. Dieser Brennraum ist vorzugsweise wenigstens zeitweise gasdicht abschließbar. Vorzugsweise kann in diesen Brennraum wenigstens zeitweise ein Strom eines Arbeitsmediums einströmen. Ein solches Arbeitsmedium ist insbesondere Gas oder Gasgemisch und vorzugsweise Luft. Vorzugsweise strömt das Arbeitsmedium durch eine Einrichtung zum Steuern eines Arbeitsmediumsstroms in den Brennraum. Diese Einrichtung kann insbesondere eine Ausnehmung in der Brennraumwandung aufweisen.

Unter dem Antreiben der Verbrennungskraftmaschine mittels des zweiten elektromechanischen Energiewandlers (Generator) ist vorzugsweise zu verstehen, dass von diesem Generator eine mechanische Leistung, insbesondere eine Drehzahl und ein Drehmoment auf diese Verbrennungskraftmaschine übertragen werden. Somit wird in diesem Betriebszustand vorzugsweise vom Generator eine Leistung auf die Verbrennungskraftmaschine übertragen.

Unter dem Verdichten eines Arbeitsmediums, insbesondere von Luft, in diesem Brennraum ist vorzugsweise zu verstehen, dass dieser Brennraum mit einem Arbeitsmedium befüllt ist und ein erstes Volumen aufweist. Vorzugsweise durch eine Bewegung des Arbeitskolbens wird dieses erste Volumen auf ein zweites Volumen verringert. Bei der Bewegung dieses Arbeitskolbens ist der Brennraum vorzugsweise wenigstens zeitweise im Wesentlichen gasdicht abgeschlossen. Insbesondere durch die Verringerung des ersten auf das zweite Volumen durch den Arbeitskolben wird die Temperatur in diesem Arbeitsmedium erhöht.

Unter dem Messen einer Vorwärmtemperatur insbesondere in der Brennraumwandung ist zu verstehen, dass eine Temperaturänderung, welche vorzugsweise durch das Verdichten eines Arbeitsmediums hervorgerufen wird, bestimmt wird. Dabei kann das Messen einer Vorwärmtemperatur direkt, vorzugsweise durch die Messung einer Temperatur, oder indirekt, also vorzugsweise durch die Messung einer Zeitspanne während derer das Arbeitsmedium verdichtet wird, ermittelt werden. Weiter vorzugsweise kann beim Messen einer Vorwärmtemperatur die Umgebungstemperatur in der unmittelbaren Umgebung der Verbrennungskraftmaschine beziehungsweise des Elektrofahrzeugs mit in Betracht gezogen werden.

Unter dem Starten der Drehmomentübertragung von der Verbrennungskraftmaschine auf den Generator ist vorzugsweise zu verstehen, dass von der Verbrennungskraftmaschine eine Leistung, insbesondere ein Drehmoment auf den Generator übertragen wird. Vorzugsweise wird diese Drehmomentübertragung gestartet, nachdem die Vorwärmtemperatur einen vorgebbaren Schwellwert (Starttemperatur) erreicht oder überschritten hat. Dabei ist unter der Starttemperatur vorzugsweise eine Temperatur zu verstehen, welche sich für die Art der chemischen Reaktion, welche in diesem Brennraum nach dem Starten der Verbrennungskraftmaschine abläuft, als günstig erwiesen hat. Die Starttemperatur kann dabei insbesondere von der Art des Verbrennungsprozesses, zum Beispiel Diesel- oder Ottoprozess und/oder von der Art des eingesetzten Kraftstoffs abhängen.

Unter einem Range Extender ist vorzugsweise eine Einrichtung zu Energieerzeugung zu verstehen. Vorzugsweise weist ein Range Extender
- einen zweiten elektromechanischen Energiewandler (Generator), welcher zum Erzeugen von elektrischer Energie vorgesehen ist und
- eine Verbrennungskraftmaschine, insbesondere einen Kreiskolben- oder Hubkolbenmotor, wobei die Verbrennungskraftmaschine zum Antrieb des Generators und der Generator zum Starten der Verbrennungskraftmaschine vorgesehen ist,
auf. Vorzugsweise sind der Generator und die Verbrennungskraftmaschine mechanisch miteinander zur Leistungsübertragung koppelbar. Durch eine mechanische Koppelung wird insbesondere ein hoher Wirkungsgrad für die Energieerzeugung erreicht.

In einer bevorzugten Ausführungsform wird die Temperatur der Verbrennungskraftmaschine, insbesondere in wenigstens einem Bereich der Brennraumwandung erhöht, bis die Temperatur einen Schwellwert erreicht oder überschritten hat. Vorzugsweise liegt dieser Schwellwert in einem Bereich von 40° C bis 120° C, bevorzugt in einem Bereich von 60° C bis 100° C und besonders bevorzugt im Wesentlichen bei ca. 80° C. Durch das Erhöhen der Temperatur, wenigstens eines Bereichs der Verbrennungskraftmaschine, vorzugsweise wenigstens im Bereich der Brennraumwandung, können die Kaltstartemissionen gesenkt und somit ein verbessertes Startverfahren erreicht werden.

In einer bevorzugten Ausführungsform wird die Leistungsübertragung von der Verbrennungskraftmaschine auf den Generator vorzugsweise erst dann gestartet, wenn der Generator die Verbrennungskraftmaschine bis zu einer Startdrehzahl beschleunigt hat. Vorzugsweise wird die Startdrehzahl solang aufrechterhalten oder erst dann eingestellt, wenn der Schwellwert der Temperatur (Starttemperatur) erreicht ist. Vorzugsweise liegt die Startdrehzahl bezogen auf die Nenndrehzahl der Verbrennungskraftmaschine (d.h. der Quotient aus Startdrehzahl dividiert durch die Nenndrehzahl) in einem Bereich von 0,25 bis 0,75, bevorzugt in einem Bereich von 0,35 bis 0,6 und besonders bevorzugt bei im Wesentlichen 0,5. Für Verbrennungskraftmaschinen, vorzugsweise mit einer Nennleistung von 10 kW bis 50 kW, liegt die Startdrehzahl vorzugsweise in einem Bereich von 500 min⁻¹ bis 5000 min⁻¹, bevorzugt in einem Bereich von 1000 min⁻¹ bis 3500 min⁻¹ und besonders bevorzugt im Wesentlichen bei 3000 min⁻¹. Vorzugsweise wird die Verbrennungskraftmaschine nicht vor Erreichen der Startdrehzahl gestartet. Dadurch, dass die Verbrennungskraftmaschine durch den Generator auf die Startdrehzahl beschleunigt wird und vorzugsweise auch die Starttemperatur erreicht ist, wird ein besonders schadstoffarmes Startverfahren erreicht und somit die Kaltstartemissionen gesenkt.

In einer bevorzugten Ausführungsform ist die vom Generator abgebbare Leistung in einem bestimmten Verhältnis zur von der Verbrennungskraftmaschine abgebbaren Leistung gewählt. Vorzugsweise ist die vom Generator abgebbare mechanische Leistung und die von diesem erzeugbare elektrische Leistung in etwa gleich groß. Vorzugsweise ist die vom Generator erzeugbare elektrische Leistung im Verhältnis zu der von der Verbrennungskraftmaschine abgebbaren Leistung in einem Bereich von 0,3 bis 3, bevorzugt in einem Bereich von 0,5 bis 1,5 und besonders bevorzugt im Wesentlichen bei 0,9. Dadurch, dass der Generator vorzugsweise eine ähnliche Leistung erzeugen kann wie die Verbrennungskraftmaschine, kann der Generator die Verbrennungskraftmaschine bzw. einen Bereich während des Startvorgangs schnell erwärmen, sowie insbesondere die Verbrennungskraftmaschine schnell auf die Startdrehzahl beschleunigen. Somit wird ein verbesserter und schadstoffarmer Startvorgang der Verbrennungskraftmaschine erreicht.

In einer bevorzugten Ausführungsform wird der Startvorgang der Verbrennungskraftmaschine in Abhängigkeit vom Ladezustand der elektrischen Energiespeichereinrichtung ausgeführt. Vorzugsweise wird der Startvorgang der Verbrennungskraftmaschine eingeleitet, wenn der Ladezustand der Energiespeichereinrichtung niedriger als 50 %, bevorzugt niedriger als 35 % und besonders bevorzugt niedriger als 25 % ist. Dadurch, dass der Startvorgang frühzeitig, insbesondere vor Erreichen einer Tiefentladung der Energiespeichereinrichtung eingeleitet wird, steht eine ausreichende Zeit zur Erwärmung der Verbrennungskraftmaschine und zum Beschleunigen dieser auf Startdrehzahl zur Verfügung, somit werden die Kaltstartemissionen verringert und ein verbessertes Startverfahren für eine Verbrennungskraftmaschine in einem Elektrofahrzeug bereitgestellt.

In einer bevorzugten Ausführungsform wird die Drehzahl der Verbrennungskraftmaschine während des Startvorgangs direkt oder indirekt detektiert. Vorzugsweise ist unter dem direkten oder indirektem Detektieren der Drehzahl der Verbrennungskraftmaschine zu verstehen, dass diese Drehzahl direkt an der Abtriebswelle der Verbrennungskraftmaschine oder an einer mit dieser in mechanischer Verbindung stehenden Welle gemessen wird bzw. dass elektrische Größen, wie vorzugsweise eine Frequenz, eine Spannung oder ein Strom des Generators, welcher die Verbrennungskraftmaschine antreibt, gemessen wird oder bekannt ist. Dadurch, dass die Drehzahl der Verbrennungskraftmaschine ermittelt wird, kann der Startzeitpunkt für die Verbrennungskraftmaschine genauer definiert werden und somit ein verbessertes und damit schadstoffärmeres Startverfahren für die Verbrennungskraftmaschine bereitgestellt werden.

In einer bevorzugten Ausführungsform wird die Temperatur wenigstens in einem Bereich der Brennraumwandung und/oder die Umgebungstemperatur der Verbrennungskraftmaschine direkt oder indirekt ermittelt. Unter dem direkten Messen der Temperatur ist dabei vorzugsweise zu verstehen, dass die Temperatur mittels eines Temperaturfühlers detektiert wird. Vorzugsweise kann die Umgebungstemperatur mit in die Steuerung des Startvorgangs der Verbrennungskraftmaschine einbezogen werden. Vorzugsweise führt eine niedrige Umgebungstemperatur dazu, dass der Startvorgang, also die Erwärmung der Verbrennungskraftmaschine beziehungsweise wenigstens eines Bereichs der Verbrennungskraftmaschine, für einen längeren Zeitraum durchgeführt wird. Umgekehrt führt insbesondere eine höhere Umgebungstemperatur zu einer Verkürzung dieses Startvorgangs. Insbesondere durch die Ermittlung der Temperatur wenigstens eines Bereichs der Brennraumwandung bzw. der Umgebungstemperatur der Verbrennungskraftmaschine oder des Elektrofahrzeugs wird eine genauere Steuerung des Startvorgangs der Verbrennungskraftmaschine ermöglicht und somit ein verbessertes Startverfahren bereitgestellt.

In einer bevorzugten Ausführungsform wird von der Verbrennungskraftmaschine nach dem Startvorgang eine mechanische Leistung auf den Generator übertragen. Diese mechanische Leistung ist vorzugsweise durch eine Drehzahl und ein Drehmoment gekennzeichnet und ist vorzugsweise im Generator in eine elektrische Leistung umwandelbar. Weiter vorzugsweise wird diese elektrische Leistung in der elektrischen Energiespeichereinrichtung abgespeichert oder vorzugsweise direkt an den Traktionsmotor übertragen. Dadurch, dass vorzugsweise unmittelbar nach dem Starten der Verbrennungskraftmaschine eine Leistung von dieser auf den Generator übertragbar ist, werden die Emissionen eines Elektrofahrzeugs mit Verbrennungskraftmaschine insgesamt gesenkt und ein verbessertes Verfahren zum Betrieb eines solchen Fahrzeugs bereitgestellt.

In einer bevorzugten Ausführungsform wird der zweite elektromechanische Energiewandler zum Antreiben der Verbrennungskraftmaschine nicht ausschließlich mit elektrischer Energie aus der Energiespeichereinrichtung versorgt. Vorzugsweise wird, im Wesentlichen während des Verzögerns und/oder beim Befahren einer Gefällestrecke, im Elektrofahrzeug gespeicherte potentielle Energie, vorzugsweise sind dies Bewegungsenergie und Lageenergie, im ersten elektromechanischen Energiewandler in elektrische Energie umgewandelt. Insbesondere beim Befahren einer starken Gefällestrecke oder beim Verzögern in kurzer Zeit wird im ersten elektromechanischen Energiewandler in der Regel soviel elektrische Energie erzeugt, dass diese wenigstens teilweise nicht mehr vollständig in die Energiespeichereinrichtung einspeicherbar ist. Vorzugsweise wird die Energie an den zweiten elektromechanischen Energiewandler geleitet, welche nicht in die Energiespeichereinrichtung einspeicherbar ist. Vorzugsweise mit dieser nicht mehr einspeicherbaren Energie treibt der zweite elektromechanische Energiewandler die Verbrennungskraftmaschine an. In der Regel begrenzt die in der Energiespeichereinrichtung abgespeicherte Energie die Reichweite eines Elektrofahrzeugs, so dass meist eine nicht auf den Antrieb des Elektrofahrzuegs gerichtete Energieentnahme aus dieser zu einer Verkürzung der Reichweite führt. Durch Verwendung von elektrischer Energie, welche unter normalen Umständen nicht in der Energiespeichereinrichtung abspeicherbar ist, für die Aufwärmung der Verbrennungskraftmaschine wird vorzugsweise eine Vergrößerung der Reichweite ermöglicht und damit ein verbessertes Verfahren zum Starten einer Verbrennungskraftmaschine bereitgestellt.

In einer bevorzugten Ausführungsform wird elektrische Energie, welche im ersten elektromechanischen Energiewandler erzeugt wird, beim Erreichen eines Schwellenwerts für den Ladezustand der Energiespeichereinrichtung an den zweiten elektromechanischen Energiewandler weitergeleitet. Vorzugsweise liegt dieser Schwellenwert oberhalb der unteren Ladegrenze. Dabei kennzeichnet die untere Ladegrenze vorzugsweise den Ladezustand, bis zu welchem planmäßig Energie aus der Energiespeichereinrichtung entnehmbar ist. Vorzugsweise ist die untere Ladegrenze dadurch gekennzeichnet, dass beim Erreichen der unteren Ladegrenze die Energieerzeugung durch das Antreiben des zweiten elektromechanischen Energiewandlers mittels der Verbrennungskraftmaschine eingeleitet wird. Durch einen Schwellenwert, welcher vorzugsweise die Verteilung der im ersten elektormechanischen Energiewandler erzeugten Energie, zwischen der Energiespeichereinrichtung und dem zweiten elektromechanischen Energiewandler ermöglicht, wird vorzugsweise ein verbrauchsoptimiertes Erwärmen der Verbrennungskraftmaschine erreicht und damit ein verbessertes Verfahren zum Starten dieser bereitgestellt.

In einer bevorzugten Ausführungsform ist die Verbrennungskraftmaschine des Range-Extenders als ein Kreiskolbenmotor beziehungsweise als ein Wankelmotor ausgeführt. Weiter vorzugsweise weist eine Verbrennungsmotor eine Abtriebswelle auf, über welche eine mechanische Leistung der Verbrennungskraftmaschine abgebbar ist. Weiter vorzugsweise weist der zweite elektromechanischer Energiewandler eine Antriebswelle auf, über welche eine mechanische Antriebsleistung aufnehmbar ist. Vorzugsweise sind diese Antriebswelle und diese Abtriebswelle koaxial, bevorzugt konzentrisch zueinander ausgerichtet. Durch eine koaxiale Ausrichtung dieser beiden Wellen wird vorzugsweise eine Range-Extender mit geringem Bauvolumen dargestellt.

In einer bevorzugten Ausführungsform ist ein Kraftfahrzeug, welches durch einen Elektromotor angetrieben wird, mit einer Verbrennungskraftmaschine versehen, welche durch ein erfindungsgemäßes Startverfahren gestartet wird.

Weitere Merkmale, Vorteile und Ausführungsformen der vorliegenden Erfindung ergeben sich aus der folgenden Beschreibung der beigefügten Figuren.

Dabei zeigt:
- Fig. 1:: einen Ablaufplan eines Verfahrens zum Starten einer Verbrennungskraftmaschine in einem Elektrofahrzeug,
- Fig. 2:: eine Struktur eines Elektrofahrzeugs mit einer Verbrennungskraftmaschine insbesondere zur Reichweitenverlängerung,
- Fig. 3:: einen Brennraum mit Brennraumwandung und Arbeitskolben mit verdichtetem und unverdichtetem Arbeitsmedium

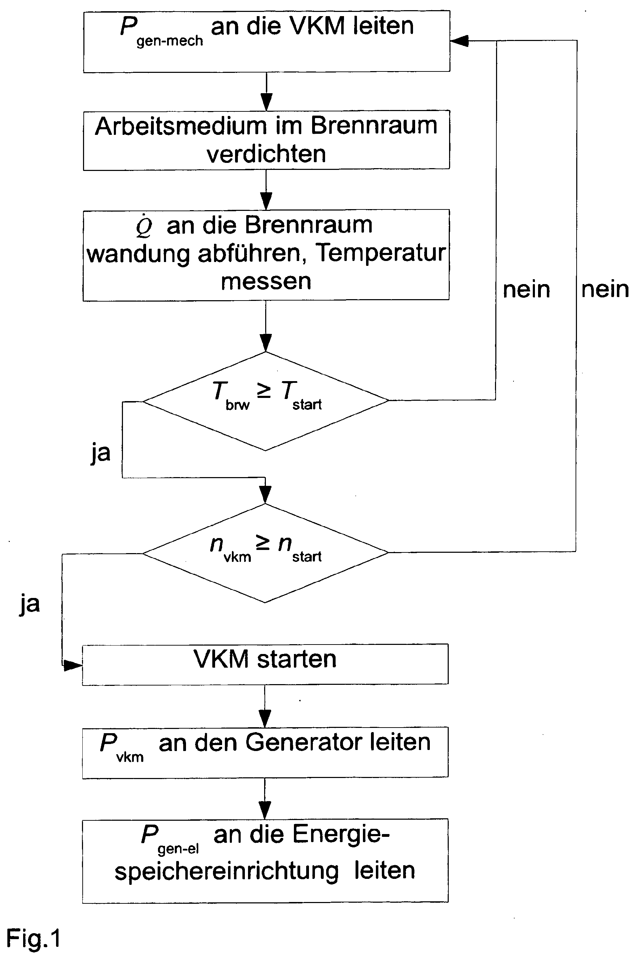

Figur 1 zeigt einen Ablaufplan für ein erfindungsgemäßes Verfahren zum Starten einer Verbrennungskraftmaschine in einem Elektrofahrzeug. Zum Starten der Verbrennungskraftmaschine wird zunächst der Generator mit elektrischer Leistung aus der Energiespeichereinrichtung versorgt, diese wird in mechanische Leistung *P*_{gen-mech} umgewandelt und an die Verbrennungskraftmaschine geleitet. In der Verbrennungskraftmaschine wird mittels der zugeführten Leistung vom Generator *P*_{gen-mech} ein Arbeitsmedium, insbesondere Luft verdichtet. Durch die Verdichtung des Arbeitsmediums erwärmt sich dieses im Brennraum. Aus dem Arbeitsmedium wird ein Wärmestrom *Q̇* an die Brennraumwandung abgeführt, dieser führt zur Erwärmung der Brennraumwandung auf die Temperatur *T*_{brw} und im Allgemeinen zur Erwärmung der Verbrennungskraftmaschine. Durch die Erwärmung der Verbrennungskraftmaschine bis zu einer vorgebbaren Starttemperatur *T*ₛₜₐᵣₜ werden die Kaltstartemissionen der Verbrennungskraftmaschine verringert. Ob die Starttemperatur *T*ₛₜₐᵣₜ der Verbrennungsmaschine erreicht ist, kann durch direktes messen der Temperatur der Brennraumwandung *T*_{brw} erfolgen oder durch ein indirektes Verfahren, zum Beispiel durch eine Zeitmessung. Hat die Brennraumwandung noch nicht die notwendige Starttemperatur (*T*_{brw} < *T*ₛₜₐᵣₜ) erreicht, wird zur Erhöhung dieser weiter Arbeitsmedium verdichtet und somit die Brennraumwandung beheizt. Neben der Temperatur der Verbrennungskraftmaschine ist auch deren Drehzahl *n*ᵥₖₘ für deren Startvorgang von Bedeutung. Hat die Drehzahl der Verbrennungskraftmaschine *n*ᵥₖₘ eine vorgebbare Startdrehzahl *n*ₛₜₐᵣₜ erreicht, wird die Verbrennungskraftmaschine gestartet, ist diese Drehzahl nicht erreicht, wird die Verbrennungskraftmaschine durch den Generator weiter beschleunigt. Unter dem Starten der Verbrennungskraftmaschine ist zu verstehen, dass nach dem Starten dieser mechanische Leistung von der Verbrennungskraftmaschine abgegeben werden kann. Nach dem Starten der Verbrennungskraftmaschine wird der Leistungsfluss zwischen dieser und dem Generator umgekehrt, so dass nunmehr die Verbrennungskraftmaschine den Generator antreibt. Im angetriebene Generator wird die zugeführte mechanische in elektrische Leistung umgewandelt *P*_{gen-el} und direkt oder indirekt an den elektrischen Antriebsmotor *E*ₘₒₜ weitergegeben. Dabei bedeutete indirekt, dass die erzeugte Leistung *P*_{gen-el} zunächst in der Energiespeichereinrichtung abgespeichert wird.

Durch die mittels des erfindungsgemäßen Verfahren erhöhte Temperatur der Verbrennungskraftmaschine werden die Kaltstartemissionen dieser gesenkt und somit ein verbessertes Startverhalten für die Verbrennungskraftmaschine erreicht.

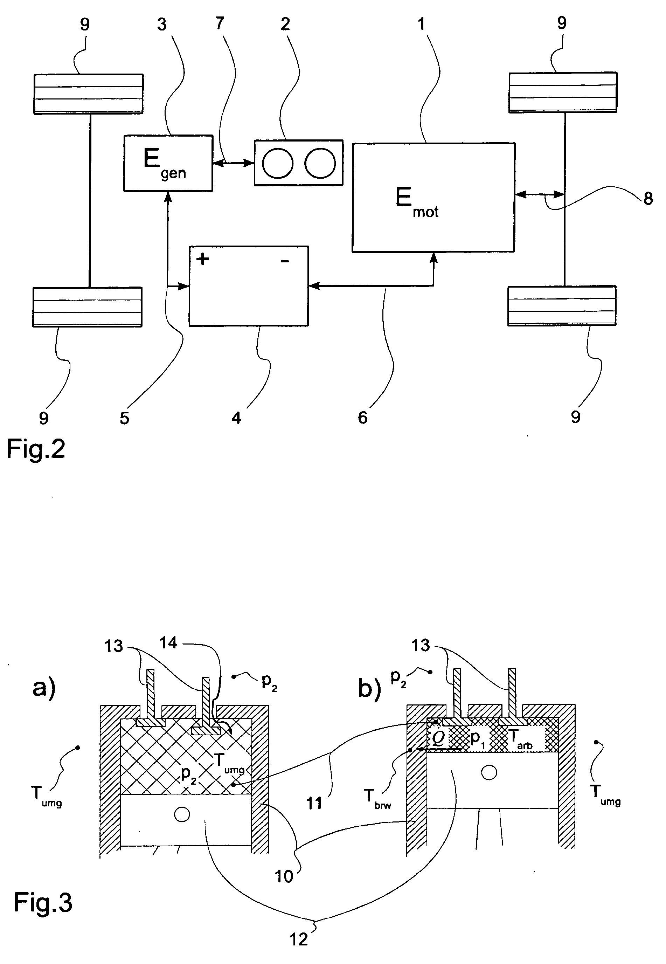

In Figur 2 ist der strukturelle Aufbau eines Elektrofahrzeugs mit einer Verbrennungskraftmaschine zur Reichweitenverlängerung dargestellt. Die Fahrtwiderstände, im Einzelnen sind dies der Luftwiderstand, der Beschleunigungswiderstand, der Rollwiderstand sowie der Steigungswiderstand werden von dem elektrischen Traktionsmotor *E*ₘₒₜ 1 überwunden, dieser gibt seine mechanische Leistung über den Leistungspfad 8 an die Rad/Reifenkombination 9 ab. Der Tranktionsmotor 1 wird aus der Energiespeichereinrichtung 4 über den elektrischen Leistungspfad 6 mit elektrischer Energie versorgt. Auf Gefällestrecken oder beim Bremsen kann der Traktionsmotor 1 mechanische Leistung von der Rad/Reifenkombinaiton 9 über den Leistungspfad 8 aufnehmen und diese über den elektrischen Leistungspfad 6 in der Energiespeichereinrichtung 4 zurückspeichern. Die elektrische Energiespeichereinrichtung 4 ist über den elektrischen Leistungspfad 5 vom Generator *E*_{gen} 3 mit elektrischer Leistung versorgbar. Der Generator 3 wird zur Erzeugung von elektrischer Leistung über den mechanischen Leistungspfad 7 von der Verbrennungskraftmaschine 2 angetrieben. Zum Starten der Verbrennungskraftmaschine 2 wird der Generator 3 als Motor betrieben. In diesem Fall wird der Generator 3 aus der Energiespeichereinrichtung 4 mit elektrischer Energie versorgt und führt der Verbrennungskraftmaschine über den mechanischen Leistungspfad 7 Leistung zu. In der Verbrennungskraftmaschine 2 wird mit dieser Leistung ein Arbeitsmedium verdichtet und durch die Verdichtung Wärme erzeugt. Mit der erzeugten Wärme wird die Verbrennungskraftmaschine 2 beheizt, bis die Starttemperatur erreicht ist. Danach wird die Verbrennungskraftmaschine 2 gestartet und die in dieser erzeugte mechanische Leistung über den Leistungspfad 7 dem Generator 3 zugeführt. Die im Generator 3 erzeugte elektrische Leistung ist über den Leistungspfad 5 in der Energiespeichereinrichtung 4 abspeicherbar. Durch das beschriebene Startverfahren werden die Emissionen der Verbrennungskraftmaschine gesenkt und damit wird ein verbessertes Betriebsverhalten erreicht.

In Figur 3a ist dargestellt, wie der Brennraum 11 durch einen Arbeitsmediumsstrom 14 über eine Einrichtung 13 zur Steuerung desselben befüllt wird. Der Brennraum 11 ist bereichsweise von der Brennraumwandung 10 begrenzt. Unter einer Einrichtung zur Steuerung eines Arbeitsmediumsstrom ist im Wesentlichen eine Ausnehmung in der Brennraumwandung 10 zu verstehen. Das Volumen des Brennraums 11 ist durch einen Arbeitskolben 12 veränderbar. Zunächst herrscht in dem Brennraum 11 die Temperatur T_{umg} so, wie diese im Wesentlichen auch außerhalb des Brennraums herrscht. Der Arbeitsmediumsstrom 14 kann auch eine von der Umgebungstemperatur abweichende Temperatur aufweisen. Im Brennraum 11 herrscht zunächst der Druck p₂, dieser Druck kann auch in der unmittelbaren Umgebung des Brennraums vorliegen. Durch die Bewegung des Arbeitskolbens 12 wird dann das Volumen des Brennraums 11 verkleinert, hierbei kann im Wesentlichen kein Arbeitsmedium durch die Einrichtung 13 zur Steuerung des Arbeitsmediumsstroms entweichen.

Das Volumen des Brennraums 11 wird, wie in Figur 3b dargestellt, durch den Arbeitskolben 12 verringert. Mit dieser Verringerung des Brennraumvolumens geht ein Druckanstieg von (Figur 3a) p₂ auf p₁ (Figur 3b) einher. Die Temperatur steigt durch diesen Druckanstieg von der zuvor vorliegenden Temperatur T_{umg} auf die dann im Brennraum herrschende Temperatur T_{arb}. Aus dem Arbeitsmedium mit der Temperatur T_{arb} wird der Temperaturstrom *Q̇* an die Brennraumwandung 10 abgeführt. Dieser Temperaturstrom *Q̇* führt zu einer Erhöhung der Temperatur der Brennraumwandung T_{brw}. Für den Fall, dass die Temperatur der Brennraumwandung T_{brw} eine vorgebbare Starttemperatur Tₛₜₐᵣₜ erreicht oder überschreitet und dass die Drehzahl der Verbrennungskraftmaschine nᵥₖₘ eine ebenfalls vorgebbare Startdrehzahl nₛₜₐᵣₜ erreicht oder überschreitet wird die Verbrennungskraftmaschine gestartet.

Durch die Vorwärmung der Verbrennungskraftmaschine mittels der Kompressionswärme aus dem Brennraum kann ein verbessertes Startverfahren für dieses dargestellt werden.

**Bezugszeichen:**

| | |
|---|---|
| 1 | erster elektromechanischer Energiewandler, Traktionsmotor |
| 2 | Verbrennungskraftmaschine |
| 3 | zweiter elektromechanischer Energiewandler, Generator |
| 4 | elektrische Energiespeichereinrichtung |
| 5 | Pfad für elektrische Leistungsübertragung; Generator, Energiespeichereinrichtung |
| 6 | Pfad für elektrische Leistungsübertragung; Energiespeichereinrichtung, Traktionsmotor |
| 7 | Pfad für mechanische Leistungsübertragung; Generator, Verbrennungskraftmaschine |
| 8 | Pfad für mechanische Leistungsübertragung Traktionsmotor, Rad/Reifenkombination |
| 9 | Rad/Reifenkombination |
| 10 | Brennraumwandung |
| 11 | Brennraum |
| 12 | Arbeitskolben |
| 13 | Einrichtung zum Steuern eines Arbeitsmediumsstroms |
| 14 | Arbeitsmediumsstrom |

**Abkürzungen:**

| | |
|---|---|
| *T*_{brw} | Temperatur wenigstens eines Abschnitts der Brennraumwandung |
| *T*ₛₜₐᵣₜ | Starttemperatur der Verbrennungskraftmaschine |
| *T*_{arb} | Temperatur im verdichteten Arbeitsmedium |
| *T*_{umg} | Temperatur im unverdichteten Arbeitsmedium, beziehungsweise Umgebungstemperatur |
| VKM | Verbrennungskraftmaschine |
| *P*_{gen-mech} | mechanische Leistung, welche der Generator erzeugt |
| *P*_{gen-el} | Elektrische Leistung, welche der Generator erzeugt |
| Pᵥₖₘ | Mechanische Leistung, welche die Verbrennungskraftmaschine erzeugt |
| *n*_{wkm} | Drehzahl der Verbrennungskraftmaschine |
| *n*ₛₜₐᵣₜ | Startdrehzahl der Verbrennungskraftmaschine |
| *Q̇* | Wärmestrom vom Arbeitsmedium zur Brennraumwandung |
| *E*ₘₒₜ | elektrischer Traktionsmotor |
| E_{gen} | elektrischer Generator |
| *p*₁ | Druck im verdichteten Arbeitsmedium |
| *p*₂ | Druck im unverdichteten Arbeitsmedium, beziehungsweise Umgebungsdruck |

## Patentansprüche

1. Verfahren zum Steuern des Startvorgangs einer Verbrennungskraftmaschine (2) in einem Elektrofahrzeug, wobei dieses wenigstens aufweist
- einen ersten elektromechanischen Energiewandler (1), welcher zum Antrieb des Elektrofahrzeugs vorgesehen ist (Traktionsmotor),
- eine elektrische Energiespeichereinrichtung (4), welche zum Speichern von elektrischer Energie und wenigstens teilweise zur Versorgung des Traktionsmotors vorgesehen ist,
- einen zweiten elektromechanischen Energiewandler (1) (Generator), welcher zum Erzeugen von elektrischer Energie vorgesehen ist und
- eine Verbrennungskraftmaschine (2), insbesondere einen Kreiskolben- oder Hubkolbenmotor, wobei die Verbrennungskraftmaschine (2) zum Antrieb des Generators und der Generator zum Starten der Verbrennungskraftmaschine (2) vorgesehen ist, dabei weist diese Verbrennungskraftmaschine (2) wenigstens einen Brennraum (11), welcher von einer Brennraumwandung (10) umgeben wird, und wenigstens einen Arbeitskolben (12) auf, und
wobei das Volumen dieses Brennraums (11) durch eine Bewegung des Arbeitskolbens (12) veränderbar und der Brennraum (11) wenigstens zeitweise vollständig oder weitgehend gasdicht abschließbar ist
**dadurch gekennzeichnet, dass**
dieses Verfahren wenigstens die Schritte aufweist:
- Antreiben der Verbrennungskraftmaschine (2) mittels des Generators,
- Verdichten eines Arbeitsmediums, insbesondere von Luft, in diesem Brennraum (11),
- Bestimmen einer Vorwärmtemperatur, insbesondere in der Brennraumwandung (10),
- Starten der Verbrennungskraftmaschine (2) und der Drehmomentübertragung von der Verbrennungskraftmaschine (2) auf den Generator, nachdem die Vorwärmtemperatur einen vorgegebenen Schwellwert (Starttemperatur) erreicht oder überschritten hat.

2. Verfahren zum Steuern des Startvorgangs einer Verbrennungskraftmaschine (2) nach Anspruch 1, **dadurch gekennzeichnet, dass**
die Temperatur der Verbrennungskraftmaschine (2), insbesondere in wenigstens einem Bereich der Brennraumwandung (10) erhöht wird, bis diese einen Schwellwert erreicht oder überschritten hat, wobei diese Schwellwert vorzugsweise bei 40° C bis 120° C, bevorzugt 60° C bis 100° C und besonders bevorzugt im Wesentlichen bei 80° C liegt.

3. Verfahren zum Steuern des Startvorgangs einer Verbrennungskraftmaschine (2) nach einem der vorhergehenden Ansprüche, **dadurch gekennzeichnet, dass**
die Leistungsübertragung von der Verbrennungskraftmaschine (2) auf den Generator begonnen wird, nachdem der Generator die Verbrennungskraftmaschine (2) bis zur Startdrehzahl beschleunigt hat, wobei die Startdrehzahl vorzugsweise 500 min⁻¹ bis 2000 min⁻¹, bevorzugt 750 min⁻¹ bis 1500 min⁻¹ und besonders bevorzugt im Wesentlichen 900 bis 1100 min⁻¹ ist.

4. Verfahren zum Steuern des Startvorgangs einer Verbrennungskraftmaschine (2) nach einem der vorhergehenden Ansprüche, **dadurch gekennzeichnet, dass**
die vom Generator über einen längeren Zeitraum abgebbare elektrische Leistung *P*_{gen-el} und die von der Verbrennungskraftmaschine (2) über einen längeren Zeitraum abgebbare Leistung *P*_{VKM} in einem bestimmten Verhältnis zueinander stehen, wobei dieses Verhältnis *P*_{gen-el}/*P*_{VKM} vorzugsweise im Bereich 0,3 bis 3, bevorzugt im Bereich 0,5 bis 1,5 und besonders bevorzugt im Wesentlichen bei 0,7 bis 0,9 liegt.

5. Verfahren zum Steuern des Startvorgangs einer Verbrennungskraftmaschine (2) nach einem der vorhergehenden Ansprüche, **dadurch gekennzeichnet, dass**
der Startvorgang in Abhängigkeit vom Ladezustand der Energiespeichereinrichtung (4) initiiert wird, vorzugsweise wird der Startvorgang der Verbrennungskraftmaschine (2) dann eingeleitet, wenn der Ladezustand der Energiespeichereinrichtung (4) einen vorgebbaren Schwellwert unterschritten hat, wobei dieser Schwellwert vorzugsweise niedriger als 50%, bevorzugt niedriger als 35 % und besonders bevorzugt niedriger als 25 % der vollständigen Ladekapazität ist.

6. Verfahren zum Steuern des Startvorgangs einer Verbrennungskraftmaschine (2) nach einem der vorhergehenden Ansprüchen, **dadurch gekennzeichnet, dass**
zur Steuerung des Verfahrens wenigstens die Drehzahl der Verbrennungskraftmaschine (2) direkt und/oder indirekt ermittelt wird.

7. Verfahren zum Steuer des Startvorgangs einer Verbrennungskraftmaschine (2) nach einem der vorhergehenden Ansprüche, **dadurch gekennzeichnet, dass**
zur Steuerung des Verfahrens die Temperatur,
- wenigstens in einem Bereich der Brennraumwandung (11) und/oder
- die Umgebungstemperatur der Verbrennungskraftmaschine (2) direkt und/oder indirekt ermittelt wird.

8. Verfahren zum Steuern des Startvorgangs einer Verbrennungskraftmaschine (2) nach einem der vorhergehenden Ansprüche, **dadurch gekennzeichnet, dass**
nach dem Starten der Verbrennungskraftmaschine (2) eine Leistung von dieser auf den Generator übertragbar und in diesem elektrische Energie erzeugbar ist.

9. Verfahren zum Steuern des Startvorgangs einer Verbrennungskraftmaschine (2) nach einem der vorhergehenden Ansprüche, **dadurch gekennzeichnet, dass**
die Verbrennungskraftmaschine (2) wenigstens einen ersten Betriebsmodus aufweist, bei welchem unter Zuführung und Entzündung eines Kraftstoffs im Brennraum (11) eine Leistung abgebbar ist und
wenigstens einen zweiten Betriebsmodus, in welchem keine Leistung abgegeben wird und welcher sich von dem ersten Betriebsmodus dadurch unterscheidet, dass keine Kraftstoffzuführung und/oder kein Zündung stattfindet,
wobei die Verbrennungskraftmaschine (2) während des Startvorgangs im Wesentlichen in diesem zweiten Betriebsmodus betrieben wird.

10. Verfahren zum Steuern des Startvorgangs einer Verbrennungskraftmaschine (2) nach einem der vorhergehenden Ansprüche, **dadurch gekennzeichnet, dass**
die Verbrennungskraftmaschine (2) im Wesentlichen während einer Verzögerung und/oder beim Befahren einer Gefällestrecke durch den zweiten elektromechanischen Energiewandler (3) angetrieben wird,
wobei dieser unmittelbar mit elektrischer Energie, welche wenigstens teilweise im ersten elektromechanischen Energiewandler (1) erzeugt wird, angetrieben wird.

11. Verfahren zum Steuern des Startvorgangs einer Verbrennungskraftmaschine (2) nach einem der vorhergehenden Ansprüche, **dadurch gekennzeichnet, dass**
die Aufteilung der Energie, welche im ersten elektromechanischen Energiewandler (1) erzeugt wird, zwischen dem zweiten elektromechanischen Energiewandler (3) und der Energiespeichereinrichtung durch einen vorgebbaren Schwellenwert für den Ladezustand der Energiespeichereinrichtung (4) beeinflussbar ist.

12. Einrichtung zur Verlängerung der Reichweite (Range-Extender) eines Elektrofahrzeugs, welche wenigstens aufweist:
- einen zweiten elektromechanischen Energiewandler (3) (Generator), welcher zum Erzeugen von elektrischer Energie vorgesehen ist und
- eine Verbrennungskraftmaschine (2), insbesondere einen Kreiskolben- oder Hubkolbenmotor, wobei die Verbrennungskraftmaschine (2) zum Antrieb des Generators und der Generator zum Starten der Verbrennungskraftmaschine (2) vorgesehen ist, wobei diese Verbrennungskraftmaschine (2) wenigstens einen Brennraum (11), welcher von einer Brennraumwandung (10) umgeben wird, und wenigstens einen Arbeitskolben (12) aufweist, und
wobei das Volumen dieses Brennraums (11) durch eine Bewegung des Arbeitskolbens (12) veränderbar und der Brennraum (11) wenigstens zeitweise vollständig oder weitgehend gasdicht abschließbar ist,
**dadurch gekennzeichnet, dass**
dieser Range-Extender durch ein Verfahren nach einem der Ansprüche 1 bis 11 gestartet wird.

13. Range-Extender nach Anspruch 12, **dadurch gekennzeichnet, dass**
die Verbrennungskraftmaschine (2) als ein Kreiskolben- beziehungsweise als ein Wankelmotor ausgeführt ist und
dass eine Abtriebswelle dieser Verbrennungskraftmaschine (2) und eine Antriebswelle dieses zweiten elektromechanischen Energiewandlers im Wesentlichen koaxial zueinander ausgerichtet sind.

14. Kraftfahrzeug mit einer Verbrennungskraftmaschine (2), welche mit einem Verfahren nach einem der vorhergehenden Ansprüche gestartet wird.

## Claims

1. Method for controlling the starting procedure of an internal combustion engine (2) in an electric vehicle, whereby said electric vehicle comprising at least
- a first electromechanical energy converter (1) which is provided for driving of the electric vehicle (traction engine),
- an electric energy storage device (4), which is provided for storage of electric energy and provided for at least partially supplying the traction engine,
- a second electromechanical energy converter (1) (generator), which is provided for generation of electric energy, and
- an internal combustion engine (2), in particular a rotary-cylinder engine or piston engine, wherein the internal combustion engine (2) is provided for driving the generator and said generator is provided for starting the internal combustion engine (2), wherein said internal combustion engine (2) comprises at least one combustion chamber (11), which is enclosed by a combustion chamber wall (10), and at least one working piston (12), and
wherein the volume of said combustion chamber (11) may be altered by a movement of the working piston (12), and the combustion chamber (11) is sealable completely or mostly gastight at least temporarily,
**characterized in that**
this method comprising at least the steps of
- driving the internal combustion engine (2) by means of the generator,
- compressing a working medium, in particular air, in said combustion chamber (11),
- determining a pre-heating temperature, in particular in the combustion chamber wall (10),
- starting the internal combustion engine (2) and the torque transmission of the internal combustion engine (2) to the generator, after the pre-heating temperature has been reached or exceeded a given threshold (starting temperature).

2. Method for controlling the starting procedure of an internal combustion engine (2) according to claim 1, **characterized in that**
the temperature of the internal combustion engine (2), in particular in at least a region of the combustion chamber wall (10), is increased until it reaches or exceeds a threshold, wherein this threshold lies advantageously at 40° C through 120° C, preferably at 60 C through 100° C and most preferably essentially at 80° C.

3. Method for controlling the starting procedure of an internal combustion engine (2) according to any of the preceding claims, **characterized in that**
the power transmission of the internal combustion engine (2) to the generator is started after the generator has accelerated the internal combustion engine (2) up to the starting engine speed, wherein the starting engine speed is advantageously 500 min⁻¹ through 2000 min⁻¹, preferably 750 min⁻¹ through 1500 min⁻¹ and most preferably essentially 900 through 1100 min⁻¹.

4. Method for controlling the starting procedure of an internal combustion engine (2) according to any of the preceding claims, **characterized in that**
the electric power P_{gen-el}, which the generator is capable of providing over an extended period of time, and the power P_{VKM}, which the internal combustion engine (2) is capable of providing over an extended period of time, are in a certain ratio, wherein this ratio P_{gen-el}/P_{VKM} is advantageously in the region of 0,3 through 3, preferably in the region of 0,5 through 1,5 and most preferably essentially at 0,7 through 0,9.

5. Method for controlling the starting procedure of an internal combustion engine (2) according to any of the preceding claims, **characterized in that**
the starting procedure is initiated in dependence of the state of charge of the energy storage device (4), preferably the starting procedure of the internal combustion engine (2) is commenced, if the state of charge of the energy storage device (4) has fallen below of a settable threshold, wherein this threshold is advantageously lower than 50 %, preferably lower than 35 % and most preferably below 25 % of the entire charge capacity.

6. Method for controlling the starting procedure of an internal combustion engine (2) according to any of the preceding claims, **characterized in that**
for controlling of the method, at least the engine speed of the internal combustion engine (2) is determined directly and/or indirectly.

7. Method for controlling the starting procedure of an internal combustion engine (2) according to any of the preceding claims, **characterized in that** for controlling of the method the temperature
- in at least a region of the combustion chamber wall (11) and/or
- the ambient temperature of the internal combustion engine (2) is determined directly and/or indirectly.

8. Method for controlling the starting procedure of an internal combustion engine (2) according to any of the preceding claims, **characterized in that**
after starting the internal combustion engine (2), a power is transferable from said internal combustion engine (2) to the generator and electric energy can be generated in said generator.

9. Method for controlling the starting procedure of an internal combustion engine (2) according to any of the preceding claims, **characterized in that**
the internal combustion engine (2) comprises at least a first mode of operation, in which a power is provided by supply and ignition of a fuel in the combustion chamber (11), and
at least a second mode of operation, in which no power is provided and which is different to the first mode of operation **in that** no fuel supply and/or no ignition is taking place,
wherein the internal combustion engine (2) is operated essentially in this second mode of operation during the starting procedure.

10. Method for controlling the starting procedure of an internal combustion engine (2) according to any of the preceding claims, **characterized in that**
the internal combustion engine (2) is driven by the second electromechanical energy converter (3) essentially during a deceleration and/or during traversing a downhill gradient,
wherein said second electromechanical energy converter (3) is driven directly by electric energy, which is generated at least partially in the first electromechanical energy converter (1).

11. Method for controlling the starting procedure of an internal combustion engine (2) according to any of the preceding claims, **characterized in that**
the distribution of the energy, which is generated in the first electromechanical energy converter (1), between the second electromechanical energy converter (3) and the energy storage device is adjustable by a settable threshold for the state of charge of the energy storage device (4).

12. Device for extending the range (range extender) of an electric vehicle, which at least comprises:
- a second electromechanical energy converter (3) (generator), which is provided for generating electric energy, and
- an internal combustion engine (2), in particular a rotary-cylinder engine or piston engine, wherein the internal combustion engine (2) is provided for driving the generator and the generator is provided for starting the internal combustion engine (2), wherein said internal combustion engine (2) comprises at least one combustion chamber (11), which is enclosed by a combustion chamber wall (10), and at least one working piston (12), and
wherein the volume of said combustion chamber (11) may be altered by a movement of the working piston (12), and the combustion chamber (11) is sealable completely or mostly gastight at least temporally,
**characterized in that**
said range extender is started by a method according to any of the claims 1 through 11.

13. Range extender according to claim 12, **characterized in that**
the internal combustion engine (2) is provided as a rotary-cylinder engine or piston engine and
a drive shaft of said internal combustion engine (2) and a drive shaft of said second electromechanical energy converter are oriented in an essentially coaxial fashion with regard to each other.

14. Motor vehicle with an internal combustion engine (2), which is started with a method according to any of the preceding claims.

## Revendications

1. Procédé pour commander l'opération de démarrage d'un moteur à combustion interne (2) dans un véhicule électrique, dans lequel celui-ci comprend :
- un premier convertisseur d'énergie électromécanique (1), qui est prévu pour l'entraînement du véhicule électrique (moteur de traction),
- un dispositif d'accumulation d'énergie électrique (4), qui est prévu pour accumuler de l'énergie électrique et pour alimenter au moins en partie le moteur de traction,
- un deuxième convertisseur d'énergie électromécanique (1) (générateur), qui est prévu pour produire de l'énergie électrique, et
- un moteur à combustion interne (2), en particulier un moteur à piston rotatif ou à pistons alternatifs, dans lequel le moteur à combustion interne (2) est prévu pour entraîner le générateur et le générateur est prévu pour faire démarrer le moteur à combustion interne (2), en l'occurrence ce moteur à combustion interne (2) présente au moins une chambre de combustion (11), qui est entourée par une paroi de chambre de combustion (10), et au moins un piston de travail (12), et
dans lequel le volume de cette chambre de combustion (11) est modifiable par un déplacement du piston de travail (12) et la chambre de combustion (11) peut être fermée au moins temporairement de façon entièrement ou largement étanche au gaz,
**caractérisé en ce que** ce procédé présente au moins les étapes suivantes :
- entraîner le moteur à combustion interne (2) au moyen du générateur,
- comprimer un milieu de travail, en particulier de l'air, dans cette chambre de combustion (11),
- déterminer une température de préchauffage, en particulier dans la paroi de chambre de combustion (10),
- démarrer le moteur à combustion interne (2) et la transmission de couple de rotation du moteur à combustion interne (2) au générateur, après que la température de préchauffage ait atteint ou dépassé une valeur de seuil prédéterminée (température de démarrage).

2. Procédé pour commander l'opération de démarrage d'un moteur à combustion interne (2) selon la revendication 1, **caractérisé en ce que** l'on augmente la température du moteur à combustion interne (2), en particulier dans au moins une région de la paroi de chambre de combustion (10), jusqu'à ce que celle-ci atteigne ou dépasse une valeur de seuil, dans lequel cette valeur de seuil se situe de préférence entre 40°C et 120°C, de préférence entre 60°C et 100°C, et de préférence encore essentiellement vers 80°C.

3. Procédé pour commander l'opération de démarrage d'un moteur à combustion interne (2) selon l'une quelconque des revendications précédentes, **caractérisé en ce que** l'on commence la transmission de puissance du moteur à combustion interne (2) au générateur, après que le générateur ait accéléré le moteur à combustion interne (2) jusqu'au régime de démarrage, dans lequel le régime de démarrage se situe de préférence entre 500 min⁻¹ et 2000 min⁻¹, de préférence entre 750 min⁻¹ et 1500 min⁻¹, et de préférence encore essentiellement entre 900 min⁻¹ et 1100 min⁻¹.

4. Procédé pour commander l'opération de démarrage d'un moteur à combustion interne (2) selon l'une quelconque des revendications précédentes, **caractérisé en ce que** la puissance électrique transmissible par le générateur pendant une période prolongée *P_{gen-el}* et la puissance transmissible par le moteur à combustion interne (2) pendant une période prolongée *P_{VKM}* présentent un rapport déterminé l'une par rapport à l'autre, dans lequel ce rapport *P_{gen-el}*/*P_{VKM}* se situe de préférence dans la plage de 0,3 à 3, de préférence dans la plage de 0,5 à 1,5 et de préférence encore essentiellement de 0,7 à 0,9.

5. Procédé pour commander l'opération de démarrage d'un moteur à combustion interne (2) selon l'une quelconque des revendications précédentes, **caractérisé en ce qu'**on lance l'opération de démarrage en fonction de l'état de charge du dispositif d'accumulation d'énergie (4), de préférence on entame l'opération de démarrage du moteur à combustion interne (2) lorsque l'état de charge du dispositif d'accumulation d'énergie (4) est descendu sous une valeur de seuil prédéfinie, dans lequel cette valeur de seuil est de préférence inférieure à 50 %, de préférence inférieure à 35 %, et de préférence encore inférieure à 25 % de la capacité de charge totale.

6. Procédé pour commander l'opération de démarrage d'un moteur à combustion interne (2) selon l'une quelconque des revendications précédentes, **caractérisé en ce que**, pour la commande du procédé, on détermine directement et/ou indirectement au moins le régime du moteur à combustion interne (2).

7. Procédé pour commander l'opération de démarrage d'un moteur à combustion interne (2) selon l'une quelconque des revendications précédentes, **caractérisé en ce que**, pour commander le procédé, on détermine directement et/ou indirectement la température,
- au moins dans une région de la paroi de chambre de combustion (11) et/ou
- la température ambiante du moteur à combustion interne (2).

8. Procédé pour commander l'opération de démarrage d'un moteur à combustion interne (2) selon l'une quelconque des revendications précédentes, **caractérisé en ce qu'**après le démarrage du moteur à combustion interne (2), une puissance peut être transmise de celui-ci au générateur et de l'énergie électrique peut être produite dans celui-ci.

9. Procédé pour commander l'opération de démarrage d'un moteur à combustion interne (2) selon l'une quelconque des revendications précédentes, **caractérisé en ce que**
le moteur à combustion interne (2) présente au moins un premier mode de fonctionnement, dans lequel une puissance peut être développée par introduction et allumage d'un carburant dans la chambre de combustion (11) et
au moins un deuxième mode de fonctionnement, dans lequel aucune puissance n'est développée et qui se différencie du premier mode de fonctionnement, **en ce qu'**il ne se produit aucune introduction de carburant et/ou aucun allumage,
dans lequel le moteur à combustion interne (2) fonctionne essentiellement dans ce deuxième mode de fonctionnement pendant l'opération de démarrage.

10. Procédé pour commander l'opération de démarrage d'un moteur à combustion interne (2) selon l'une quelconque des revendications précédentes, **caractérisé en ce que**
le moteur à combustion interne (2) est entraîné par le deuxième convertisseur d'énergie électromécanique (3) essentiellement pendant une décélération et/ou lors d'un parcours en descente,
dans lequel celui-ci est entraîné directement avec de l'énergie électrique, qui est produite au moins en partie dans le premier convertisseur d'énergie électromécanique (1).

11. Procédé pour commander l'opération de démarrage d'un moteur à combustion interne (2) selon l'une quelconque des revendications précédentes, **caractérisé en ce que** la répartition de l'énergie, qui est produite dans le premier convertisseur d'énergie électromécanique (1), entre le deuxième convertisseur d'énergie électromécanique (3) et le dispositif d'accumulation d'énergie, peut être influencée par une valeur de seuil prédéfinie pour l'état de charge du dispositif d'accumulation d'énergie (4).

12. Dispositif pour augmenter l'autonomie (Range-Extender) d'un véhicule électrique, qui comprend au moins :
- un deuxième convertisseur d'énergie électromécanique (3) (générateur), qui est prévu pour produire de l'énergie électrique, et
- un moteur à combustion interne (2), en particulier un moteur à piston rotatif ou à pistons alternatifs, dans lequel le moteur à combustion interne (2) est prévu pour entraîner le générateur et le générateur est prévu pour faire démarrer le moteur à combustion interne (2),
- dans lequel ce moteur à combustion interne (2) présente au moins une chambre de combustion (11), qui est entourée par une paroi de chambre de combustion (10), et au moins un piston de travail (12), et
- dans lequel le volume de cette chambre de combustion (11) est modifiable par un déplacement du piston de travail (12) et la chambre de combustion (11) peut être fermée au moins temporairement de façon entièrement ou largement étanche au gaz,
**caractérisé en ce que** cet extenseur d'autonomie est mis en marche par un procédé selon l'une quelconque des revendications 1 à 11.

13. Range-Extender selon la revendication 12, **caractérisé en ce que** le moteur à combustion interne (2) est constitué par un moteur à piston rotatif ou par un moteur Wankel et **en ce qu'**un arbre de sortie de ce moteur à combustion interne (2) et un arbre d'entraînement de ce deuxième convertisseur d'énergie électromécanique sont alignés de façon essentiellement coaxiale l'un par rapport à l'autre.

14. Véhicule à moteur avec un moteur à combustion interne (2), qui est mis en marche avec un procédé selon l'une quelconque des revendications précédentes.
